## Europäisches Patentamt

## European Patent Office

## Office européen des brevets

(11) Publication number: **0 105 264**
**B1**

(12) **EUROPEAN PATENT SPECIFICATION**

(45) Date of publication of patent specification: **07.10.87**

(51) Int. Cl.⁴: **F 16 L 59/02**

(21) Application number: **82902510.5**

(22) Date of filing: **12.07.82**

(86) International application number:
**PCT/US82/00939**

(87) International publication number:
**WO 83/03458 13.10.83 Gazette 83/24**

(54) **UNIVERSAL REMOVABLE INSULATION.**

(30) Priority: **22.03.82 US 360355**

(43) Date of publication of application:
**18.04.84 Bulletin 84/16**

(45) Publication of the grant of the patent:
**07.10.87 Bulletin 87/41**

(84) Designated Contracting States:
**AT DE FR GB NL SE**

(56) References cited:
**FR-A-2 151 776
GB-A-1 263 198
US-A-3 556 158
US-A-3 598 157
US-A-4 071 043**

(73) Proprietor: **BUSSE, Richard O.**
**12862 Ingersoll**
**Hugo MN 55038 (US)**

(72) Inventor: **BUSSE, Richard O.**
**12862 Ingersoll**
**Hugo MN 55038 (US)**

(74) Representative: **Goetz, Rupert et al**
**Patentanwälte Wuesthoff- v. Pechmann-**
**Behrens-Goetz Schweigerstrasse 2**
**D-8000 München 90 (DE)**

Courier Press, Leamington Spa, England.

## Description

### Technical Field

The invention of the present patent application is related broadly to the field of energy conservation. More narrowly, the invention is directed to the field of insulation as used in various hot and cold fluid flow systems. The invention specifically deals with removable insulations which can be applied to any number of fittings in the fluid flow system to insulate the particular fitting from gain or loss of heat as the particular application may dictate.

### Background of the Invention

Various types of systems utilize fluids which are maintained at a temperature either above or below ambient temperature. Illustrative of systems wherein the temperature is maintained above ambient temperatures are steam systems used in factories and industrial institutions for heating, cooking, and other purposes.

Similarly, such concerns also utilize systems wherein fluid must be maintained at a temperature below ambient temperature. Typical of this type of system are refrigeration and air conditioning systems.

Because of the energy requirements involved in reducing the temperature of the fluid to a desired level in refrigeration systems and in raising the temperature of the fluid to a desired level in heating systems, it is desirable that heat gain and heat loss, respectively, by the fluid be minimized. This is particularly true in view of the ever escalating costs of energy.

Regardless of the temperature of the fluid carried, these fluid flow systems typically include pipe conduits and various types of fittings interposed in the conduit lines. Fittings which might be interposed in the lines include valves, orifices, L's, and T's. This listing is by no means, however, exhaustive. Various other types of fittings are specifically applicable for use in only systems wherein the fluid is maintained at a temperature either above or below ambient temperature. Steam traps are one type of fitting which might be used in only hot fluid systems.

Because thermal energy transfer might occur either along the pipe lines or through the fittings, it is desirable that both be insulated. Various types of insulation have been designed to insulate the conduit lines. Illustrative of one method of insulation is one in which a fire retardant heat insulative material is wrapped around the pipe and a paste, mixed specifically for the purpose of providing a hardening shell, applied thereto. This method is known as "lagging".

Conducting lagging operations is particularly messy and difficult to clean up. More importantly, however, it is very unsuited for insulation of the various fittings. This is true for a number of reasons. First, while the pipe conduits are generally circularly cylindrical and extend uniformly in an axial direction, valve bodies and other similar fittings have very irregular surfaces.

Consequently, it is difficult to apply a sheet material without bunching occurring. Second, frequently, in the case of fittings, moving parts, such as valve stems, are present which might become clogged and inoperative if a paste were to be applied.

Because of these influencing factors, keeping in mind the need to insulate the total fluid flow system, the use of various custom designed insulations has been initiated. Such custom designed structures, however, can, in some cases, be quite expensive.

US—A—3 598 157 discloses pipe fitting insulation having a central cavity large enough to accommodate the largest intended pipe fitting. The fitting has end, pipe-receiving apertures of outwardly progressive smaller cross-section, and the insulation has indicia on its outer surface to facilitate removal of end sections of the insulation revealing apertures of the desired dimension. However, this cutting operation presents substantial practical difficulties. In particular, the user, in cutting off the appropriate lengths of insulation so as to reveal the desired aperture, has no clear guide as to the particular indicium at which the cut is to be made.

It is to these problems in the prior art that the invention of the present application is directed. It is an insulation apparatus which can be applied to virtually any fitting which can be interposed in a fluid flow line. Because of its unique structure, it can accommodate the irregular surfaces of the various fittings.

### Summary of the Invention

The invention of the present application is a removable, reusable insulation for insulating various hot and cold fluid conduit fittings, comprising a shell bifurcated along a plane to define a pair of engageable edges, the shell having means such that it can be selectively cut so as to define selected fluid conduit fitting-receiving apertures, characterised in that said means comprises a plurality of externally accessible, removable cut-outs formed in the shell, complementary portions of each of the cut-outs being in each of said edges, each cut-out including a plurality of externally visible indicia disposed one within another and defining a plurality of circular-shaped or other-shaped zones of dimensions corresponding respectively to a series of angularly spaced portions of fluid conduit fittings and which can selectively be cut out to define an aperture to accommodate a predetermined one of said portions.

Additionally, each portion of the shell can have at least one additional cut-out formed therein to accommodate portions of a fitting insulated thereby which extend normal to a plane defined by portions of the fitting passing through said cutouts formed in said edges. Such additional cutouts can, when removed in an appropriate manner, provide access for portions of a fitting which extend normal to a plane defined by other portions of the same fitting passing through the cut-outs formed in the edges of the shell portions. A fitting having portions extending in three dimensions from the fitting body can, therefore, be accommodated by the insulation apparatus.

The externally visible indicia of the cut-outs indicate the various sizes of pipes with which different fittings which might be accommodated might be used. Typically, such pipes are circularly cylindrical and have a known diameter. The indicia can correspond to various standard sized diameters used in industrial applications. The indicia marked on the cut-out panels would normally be circular, concentric rings. One preferred structure incorporates a panel which is stepped in a direction axially relative to the axis of elongation of the fitting portion. In order to accommodate the fitting portion, therefore, the panel need only be cut at the base of one of the steps, i.e. the step having a diameter similar to that of the piping with which the fitting is used. The two shell portions can, thereafter, be closed over the fitting with the pipe being received in the aperture cut out of the cut-out panel.

Depending upon the particular application, the shell can be formed of different materials. In a cold fluid system, the shell portions would typically be made of either a polystyrene plastic or a urethane material and would be relatively thick. In a hot fluid system, the shell portions would typically be made of an acrylonitrile-butadiene-styrene resin or polyvinyl chloride. In a hot fluid system application, the shell portions might be relatively thin and carry therein removable fibrous insulative material inserts. Such inserts might be made of fiberglass or other appropriate insulative material. Such inserts could be made oversized so that threads thereof would extend through apertures cut into the cut-out panels and merge with insulative materials surrounding the pipes to which the fitting is attached. A complete insulative seal can, thereby, be achieved.

In the insulations of the present invention the user can see at all times the size and/or shape of the aperture which will result by cutting along any particular line in the shell of the insulation, and the risk of cutting at the wrong place is minimal.

There is now described, by way of example and with reference to the accompanying drawings, a preferred embodiment of the present invention.

Brief Description of the Drawings

Figure 1 is a view in perspective showing an insulation in accordance with the present invention as attached to a T fitting in a fluid system;

Figure 2 is an enlarged view taken generally along the line 2—2 of Fig. 1;

Figure 3 is a perspective view showing the insulation of Fig. 1 in an opened position;

Figure 4 is a view taken generally along the line 4—4 of Fig. 3; and

Figure 5 is an enlarged view illustrating structure for holding one shell portion to the other and for precluding the entry of liquids into the insulative structure.

Detailed Description of the Invention

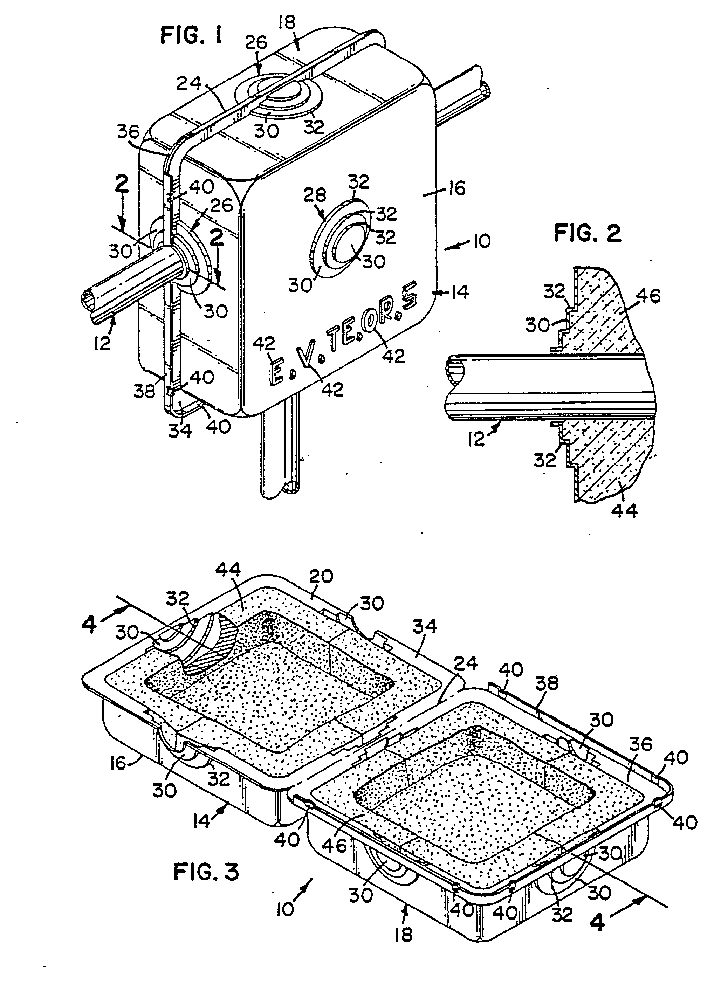

Referring now to the drawings wherein like reference numerals denote like elements throughout the several views, Fig. 1 illustrates a universal insulation 10 in accordance with the invention of the present application. As seen in that figure, the insulation 10, which is removable so that it can be reused under other circumstances, is shown as being mounted to a tee fitting 12 which might typically be used in a steam distribution system. It will be understood that although a tee fitting 12 is illustrated as being insulated by the invention, various other types of fittings can be encased thereby. Because of the structure of the insulation 10, it can be affixed to virtually any type of fitting which might be positioned in either a hot or cold fluid distribution and control system. In this respect, the system is universal.

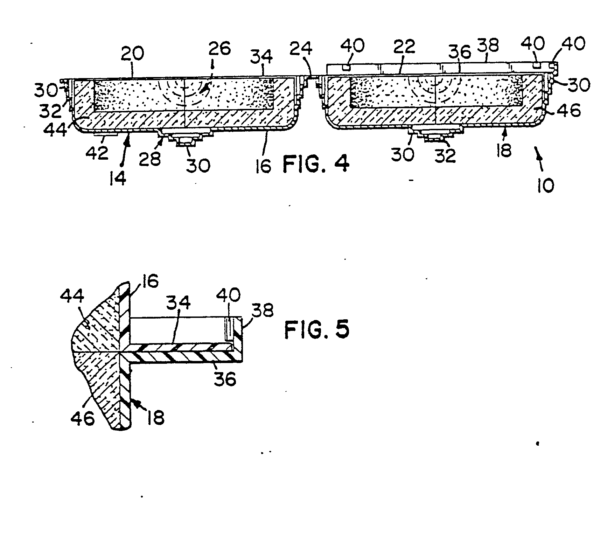

The insulation of the present invention includes a shell 14 which is bifurcated to define two portions 16, 18. Although not essential to the invention, the drawings, and particularly Figs. 3 and 4, illustrate the shell 14 as being bifurcated into two portions 16, 18 of equal size. The shell 14 is bifurcated along a plane to define two edges 20, 22 which are engageable when the portions 16, 18 of the shell 14 are mated to insulate a fitting.

Throughout the various figures, the bifurcated portions 16, 18 are shown as being hinged as at 24 so that the insulation 10 is integrally formed. It will be understood, however, that it is equally within the scope of the invention to provide two bifurcated portions 16, 18 which are separate from one another.

The drawings illustrate the insulation 10, when encasing a fitting, as being polyhedral. Specifically, the insulation 10 is illustrated as being quadralateral in cross-section. Cut-out panels 26, 28 formed in the insulation 10 can, thereby, accommodate portions of fittings which, in most cases extend generally perpendicular to one another.

Cut-out portions 26 are shown as being formed in the matable edges 20, 22, one cut-out panel 26 being formed in each of the four sides along which the portions 16, 18 are mated. The panels 26 are formed so that a portion of each is disposed in each of the two bifurcated portions 16, 18 of the shell 14. That is, each of the four cut-out panels 26 intersects the mated edges 20, 22. As shown in the figures, the four cut-out panels 26 which intersect the mated edges 20, 22 are disposed in planes perpendicular to the planes of adjacent cut-out panels 26.

Additionally, each shell portion 16, 18 can have a cut out panel 28 wholly formed therein, and disposed in a plane generally parallel to the plane defined by the mated edges 20, 22. The insulation 10 can, thereby, accommodate a fitting having portions extending in a direction generally perpendicular to a plane defined by other portions of the fitting. To illustrate, if a fitting has an inlet conduit coming into a main body portion thereof and a primary outlet conduit exiting from the main body portion at ninety degrees to the inlet portion, said conduits can be accommodated by apertures formed in the insulation 10 by cutting out portions of the cut-out panels 26 formed in the matable edges 20, 22 thereof. If, however, the conduit should have another portion, such as a secondary outlet conduit, extending from the main body portion generally perpendicular to a plane defined by the inlet conduit and the primary outlet conduit, an aperture can be formed in a cut-out panel 28 provided wholly within one of the bifurcated portions 16, 18 of the shell 14.

In most embodiments of the invention, the cut-out panels 26, 28 would be circular since most piping used with the type of fittings discussed herein are circularly cylindrical. The cut-out panels 26, 28 can be defined in any appropriate manner. This can include merely marking circular indicia on the shell 14 at appropriate locations to indicate where apertures should be made. The shell 14 can be given a reduced strength at the locations where the apertures are to be cut in order to facilitate the provision of the apertures.

In a preferred embodiment, the indicia representing the various circumferences of pipes with which the fitting is used can comprise stepped platforms 30 concentrically formed in the shell 14. The platforms 30 are stepped axially with respect to the intended direction of extension of the portion of a fitting which is to be disposed within the particular cut out aperture. As in the case of mere markings on the shell 14, these stepped panels 30 can be provided with reduced strength at the circular shoulders 32 defined thereby so that the apertures can be more readily formed.

When an insulation 10 in accordance with the present invention is mounted to a fitting, it is desirable that condensation or other liquid which might be present in the environment surrounding the fitting not be permitted to seep into the insulation. Such contamination can be, at best, precluded, and, at worst, inhibited by providing a liquid seal at the intersection of the mated edges. Each bifurcated portion 16, 18 of the shell 14 can be provided with a flange 34, 36 which extends outwardly away from the fitting when the insulation 10 encases the fitting. Each flange 34, 36 can define a plane so that the planes, thereby defined, are parallel, with faces of the flanges 34, 36 in engagement when the portions 16, 18 are mated. One of the flanges 36 can be provided, at its extremity remote from the portion 18 of the shell 14 to which it is attached, with a liquid entry shield 38. The shield 38 can be made to extend generally normal to the flange 36 along its length. If the flanges 34, 36 are essentially of the same size, the one not provided with a shield 38 will fit closely within the shield 38 of the other flange 36. The shield 38 can, therefore, be provided with a plurality of nubs 40 extending inwardly from the shield 38. The nubs 40 can be resilient in nature so that, when the two portions 16, 18 of the shell 14 are brought into mating engagement, they will deform to allow the opposite flange 34 to engage the flange 36 carrying the shield 38. After passage of this flange 34, therefore, they will snap out to retain the flanges 34, 36 in engagement.

As seen in the figures, the shield 38 is provided only about three sides of the edge 22 of one of the portions 18. This is so since the embodiment illustrated in the figures is one wherein the portions 16, 18 are hinged along a fourth side. In such an embodiment, of course, shielding would not be necessary along the fourth side since a seal naturally exists there. In embodiments wherein the shell portions 16, 18 are separable pieces, the shield 38 would, appropriately, be provided completely about the edge of one of the portions.

It will be understood that the method for mating the shell portions 16, 18 need not be as described hereinbefore. Rather, any appropriate mating means might be utilized to hold the portions 16, 18 together.

As previously indicated, the insulation 10 of the present application can be used with enumerable types of fittings. They include steam traps, strainers, valves, tee connectors, elbows, orifices, etc. Once applied to the particular fitting, it is often difficult to determine from visual inspection, the type of fitting thereby insulated. Yet, it remains important to know what type of fitting is located at a particular location in the system. This can be accomplished by making records which can be maintained for subsequent use in ascertaining the type of fitting insulated in a particular location. The shell 14 of the present insulation can, however, be provided with indicia 42 representative of the various types of fittings which might be insulated. The indicia 42 might use, for example, an "E" to indicate an elbow, a "V" to indicate a valve, "TE" to indicate a tee fitting, "OR" to indicate an orifice, and "S" to indicate a strainer. These indica 42 are, of course, not all inclusive, and other indicia can be devised to represent any type of fitting which might be encountered. When a person applying the insulation 10 to the fitting has completed the installation, he need merely indicate in an appropriate manner the type of fitting which has been insulated. He can do this by either x-ing out the appropriate indicia 42 representing the fitting insulated or by circling the appropriate indicia 42.

Depending upon the particular application — that is, whether used in a hot or cold fluid system — the shell 14 may be made of different materials. In cold system applications, it has been found appropriate to manufacture the shell 14 from either a polystyrene plastic or urethane material. When such materials are used, the rigidity of the material would preclude the shell 14 from conforming to the shape of the fitting insulated. The shell 14 would, therefore, provide all the insulative capacity for the structure.

In hot fluid system applications, the shell 14 would appropriately be formed of either polyvinyl chloride or acrylonitrile-butadiene-styrene resin. When such materials are used to form the shell 14, most of the insulative capacity of the insulation structure would be provided by a pair of fiberglass or other fibrous material inserts 44, 46. One of the inserts 44, 46 would be seated in each of the shell portions 16, 18. The inserts 44, 46 would be removable so that if the fibrous material deteriorated over a period of time, they could be replaced. Similarly, if a particular shell 14 was to be used in a scenario requiring a higher insulative capacity, one insert could be exchanged for another having better characteristics for the particular scenario.

The inserts 44, 46 would typically be somewhat amorphous in nature so that they would conform to the contours of the fitting and be in engagement with the fitting body. The inserts 44, 46 can be made somewhat oversized so that they would tend to protrude through the apertures formed in the cut-out portions 26, 28 of the shell 14 and merge with insulative material surrounding pipes to which the fitting is attached. Maximum insulative capacity can, thereby, be achieved.

**Claims**

1. A removable, reusable insulation for insulating various hot and cold fluid conduit fittings, comprising a shell (10) bifurcated along a plane to define a pair of engageable edges (20, 22), the shell having means such that it can be selectively cut so as to define selected fluid conduit fitting-receiving apertures, characterised in that said means comprises a plurality of externally accessible, removable cut-outs (26) formed in the shell, complementary portions of each of the cut-outs being in each of said edges (20, 22), each cut-out including a plurality of externally visible indicia disposed one within another and defining a plurality of circular-shaped or other shaped zones of dimensions corresponding respectively to a series of angularly spaced portions of fluid conduit fittings and which can selectively be cut out to define an aperture to accommodate a predetermined one of said portions.

2. An insulation in accordance with Claim 1, characterised in that said indicia are defined by a plurality of externally accessible, generally concentric annular shoulders (32) against which an instrument can be engaged to effect said cutting.

3. An insulation in accordance with claim 1 or 2, characterised in that said insulation further includes cut-outs (28) formed therein to accommodate portions of a fitting insulated thereby which extend normal to a plane defined by portions of the fitting passing through said cut-outs (26) formed in said edges.

4. An insulation in accordance with claim 1, 2 or 3, characterised in that said shell is formed from a polystyrene, polyurethane, polyvinyl chloride or an acrylonitrile-butadiene-styrene material.

5. An insulation in accordance with any of the preceding claims, characterised in that it further includes a pair of fiberglass insulation inserts (44, 46), each insert being seatable in one of said bifurcated shell portions to completely encase a fitting.

6. An insulation in accordance with claim 5, characterised in that said inserts are oversized each to extend through the apertures formed by said selective cutting of the cut-outs and, in use, to merge with insulative material surrounding fluid conduits to which the fitting encased between the shell portions is attached.

7. An insulation in accordance with any of the preceding claims, characterised in that it includes auxiliary indicia (42) representative of various fittings which can be encased between said shell portions, formed on said shell, whereby, when a particular fitting is encased between said shell portions, said indicia can be marked appropriately to indicate the type of fitting thereby insulated.

8. An insulation in accordance with any of the preceding claims, characterised in that said edges have facing, parallel flanges (34, 36) engageable to mate said shell portions together, and the insulation has means for releasably holding said flanges in engagement.

9. An insulation in accordance with claim 8, characterised in that it includes a liquid entry shield (38) attached to one of said flanges at the extremity thereof and extending normal thereto in a direction, when said shell portions are mated, toward the opposite of said flanges.

10. An insulation in accordance with claim 8, characterised in that said holding means comprises a plurality of resilient nubs (40) carried by said shield and extending from said shield inwardly toward said shell portions, wherein, as said portions approach one another during mating, said nubs snap over the flange carried by said shell portion opposite that to which said shield is attached.

**Patentansprüche**

1. Eine abnehmbare, wiederverwendbare Isolation für Isolierung von verschiedenen heissen bzw. kalten Leitungsverbindungen für Flüssigkeiten bestehend aus einem geteilten in einer Ebene und ein Paar von einrastbaren Umrandungen (20, 22) aufweisendem Gehäuse (10), mit den Mitteln so ausgestattet, dass es selektiv so ausgeschnitten werden kann, dass die ausgewählten Flüssigkeitsleitungsarmaturen aufnehmende Öffnungen damit bestimmt sind, dadurch gekennzeichnet, dass diese Mittel aus mehreren, aussenseits zugänglichen, im Gehäuse geformten Ausschnitten (26) bestehen, die entfernt werden können und die gegenseitig ergänzende Teile eines jeden Ausschnitts befinden sich in jeder der Umrandungen (20, 22), wobei jeder Ausschnitt aus mehreren aussenseits sichtbaren Markierungen besteht, welche ineinander ausgelegt sind und mehrere kreisförmige bzw. anders-förmige Zonen mit den Abmessungen bestimmen, welche jeweils den Reihen von winklig ausgelegten Teilen der Flüssigkeitsleitungsarmaturen entsprechen und selektiv ausgeschnitten werden können, um die Öffnung dem Armaturteil anzupassen.

2. Isolation nach Anspruch 1, dadurch gekennzeichnet, dass die Markierungen durch mehrere, aussenseits zugängliche, im allgemeinen konzentrische ringförmige Schultern bestimmt sind, gegen welche ein Werkzeug eingesetzt werden kann um das Ausschneiden zu bewirken.

3. Isolation nach Anspruch 1 oder 2, dadurch gekennzeichnet, dass die Isolation weitere Ausschnitte (28) zur Aufnahme der damit isolierten Armaturenteilen besitzt, welche normal zu der durch die in den Umrandungen geformte Ausschnitte (26) durchgehende Teile der Armatur bestimmten Ebene, orientiert sind.

4. Isolation nach Anspruch 1, 2 oder 3, dadurch gekennzeichnet, dass das Gehäuse aus einem Polystyrol, Polyurethan, Polyvinylchlorid oder einem Akrylnitril-Butadiene-Styrol gemacht ist.

5. Isolation nach einem der oben genannten Ansprüche, dadurch gekennzeichnet, dass es weiter ein Paar der Fiberglaseinlagen (44, 46) besitzt, wobei jeweils eine Einlage in jede Hälfte des geteilten Gehäuse einsetzbar ist, um die Armatur vollständig zu umhüllen.

6. Isolation nach Anspruch 5, dadurch gekennzeichnet, dass die Einlagen überdimensioniert sind, um durch die selektiv ausgeschnittenen Öffnungen durchzugehen und, während Gebrauchs, sich mit dem die Flüssigkeitsleitungen mit der angeschlossenen und zwischen den Gehäusehälften eingefassten armaturumfassenden Isolationsmaterial zusammenzuschliessen.

7. Isolation nach einem der vorgehenden Ansprüche, dadurch gekennzeichnet, dass es zusätzliche auf dem Gehäuse ausgeprägte Markierungen (42) besitzt, welche verschiedene Armaturen kennzeichnen, die zwischen den Gehäusehälften eingesetzt werden können, wobei im Falle einer einzelnen zwischen den Gehäusehälften eingesetzten Armatur, die Markierungen entsprechend gekennzeichnet werden können um den Typ der sich darin befindenden Armatur aufzuzeigen.

8. Isolation nach einem der vorgehenden Ansprüche, dadurch gekennzeichnet, dass die Umrandungen zueinander liegende, parallele Flanschen (34, 36) besitzen, wobei diese miteinander verbunden werden können, um die Teile des Gehäuses zusammenzuhalten, und die Isolation mit den Mitteln die Flanschen lösbar in der Verbindung zu halten, versehen ist.

9. Isolation nach Anspruch 8, dadurch gekennzeichnet, dass es eine zu einem der Flanschen auf seinem äussersten Ende angebrachte Flüssigkeitsabschirmung (38) besitzt und diese sich normal zu dem Flansch und in der Richtung des gegenüberliegenden Flansches, wenn das Gehäuse zugeschlossen ist, erstreckt.

10. Isolation nach Anspruch 8, dadurch gekennzeichnet, dass die Halterungen aus mehreren, elastischen, auf der Abschirmung angebrachten Knötchen (40) bestehen, wobei diese nach innen zu der anderen Gehäusehälfte gerichtet sind, so dass wenn beide Hälfte sich zueinander nähern während des Gehäuse zugeschlossen wird, die Knötchen schnappen über den der Abschirmung gegenüberliegenden Flansch.

## Revendications

1. Isolement amovible et réutilisable pour isoler thermiquement les différentes jonctions de conduites de fluide chaud et froid, comprenant une coquille (10) qui se divise le long d'un plan pour former deux moitiés ayant des bordures qui s'enclenchent (20, 22); coquille possédant des moyens permettant de la découper sélectivement afin de produire des ouvertures pour recevoir les conduites de fluide des jonctions choisies, caractérisé en ce que lesdits moyens comprennent une multitude de découpes amovibles (26) créées dans la coquille même et pouvant être atteintes de l'extérieur, les portions complémentaires de chacune de ces découpes se trouvant dans la partie correspondante de la coquille (20, 22); chaque découpe qui comprend une multitude d'indices visibles de l'extérieur, est disposée l'une à l'intérieur de l'autre et définit ainsi une multitude de zones de forme circulaire ou de forme quelconque dont les dimensions correspondent respectivement à une série de dispositions angulaires des conduites de fluide de la jonction; ladite découpe peut être découpée pour créer une ouverture afin d'accommoder une disposition angulaire déterminée de la jonction des conduites.

2. Isolement selon la revendication 1, caractérisé en ce que desdits indices sont définis par la multitude de plaquettes circulaires (32) pouvant être atteintes de l'extérieur et généralement concentriques contre lesquelles on peut insérer un instrument pour effectuer la découpe.

3. Isolement selon l'une quelconque des revendications 1 à 2, caractérisé en ce que ledit isolement comprend en plus des découpes (28) ainsi formées pour accommoder les portions des conduites de la jonction qui s'étendent perpendiculairement au plan défini par les autres portions dedes conduites de la jonction, passent à travers lesdites découpes (26) formés dans lesdites bordures.

4. Isolement selon l'une quelconque des revendications 1 à 3, caractérisé en ce que ladite coquille est faite de polystyrène, polyuréthane, chlorure de polyvinyl ou de matière en acrylonitrile-butadiène-styrène.

5. Isolement selon l'une quelconque des revendications 1 à 4, caractérisé en ce qu'il comprend en plus une paire de garnitures d'isolement en fibre de verre (44, 46); chaque garniture se moulant dans une des deux moitiés de la coquille et enveloppant complètement la jonction des conduites.

6. Isolement selon la revendication 5, caractérisé en ce que lesdites garnitures sont plus grandes que les deux moitiés de la coquille et se débordent à travers les ouvertures produites par les découpages sélectifs des découpes pour se joindre avec les matières d'isolement entourant les conduites de fluide de la jonction qui elle-même est enveloppée dans les deux moitiés de la coquille.

7. Isolement selon l'une quelconque des revendications précédentes, caractérisé en ce qu'il comprend des indices auxiliaires (42) représentifs des différentes jonctions pouvant être enveloppées entre les deux moitiés de la coquille, et pré-formés sur ladite coquille, de sorte que quand une jonction particulière est enveloppée entre les deux moitiés de la coquille, lesdits indices peuvent être marqués en conséquence pour indiquer le type de la jonction isolée.

8. Isolement selon l'une quelconque des revendications précédentes, caractérisé en ce que lesdites bordures ont des rebords parallèles (34, 36), pouvant s'enclencher pour assembler les deux moitiés de la coquille, et que l'isolement possède des moyens pour maintenir lesdits rebords enclenchés.

9. Isolement selon la revendication 8, caractérisé en ce qu'il comprend une armature étanche (38) attachée à l'un desdits rebords, à l'extrémité de celui-ci, et s'étendant perpendiculairement dans la direction du rebord opposé quand les deux moitiés de la coquilles sont assemblées.

10. Isolement selon la revendication 8, caractérisé en ce que les moyens pour maintenir ensemble les deux moitiés de la coquilles comprennent une multitude de protubérances (40) portant par ladite armature et se courbant vers l'intérieur desdites moitiés de la coquille, et lorsque celles-ci se rapprochant l'une de l'autre pendant l'assemblage, lesdites protubérances s'engagent avec un bruit sec au rebord de ladite moitié de la coquille à l'opposé de celle sur laquelle ladite armature portant les protubérances est attachée.

FIG. 1

FIG. 2

FIG. 3

FIG. 4

FIG. 5